Europäisches Patentamt

European Patent Office

Office européen des brevets

(19)

(11) Veröffentlichungsnummer: **0 050 377**
**B1**

(12) # EUROPÄISCHE PATENTSCHRIFT

(45) Veröffentlichungstag der Patentschrift:
02.10.85

(51) Int. Cl.⁴: **F 16 D  69/02, C 08 J  5/00**

(21) Anmeldenummer: 81200804.3

(22) Anmeldetag: 13.07.81

(54) **Asbestfreies Reibmaterial.**

(30) Priorität: 21.10.80  DE 3039607
16.10.80  DE 3039089

(43) Veröffentlichungstag der Anmeldung:
28.04.82 Patentblatt 82/17

(45) Bekanntmachung des Hinweises auf die Patenterteilung:
02.10.85 Patentblatt 85/40

(84) Benannte Vertragsstaaten:
**DE FR GB IT NL SE**

(56) Entgegenhaltungen:
**EP - A - 0 000 839**
**EP - A - 0 000 840**
**EP - A - 0 034 258**
**FR - A - 2 379 563**
**FR - A - 2 394 713**
**US - A - 4 119 591**

(73) Patentinhaber: **Rütgerswerke Aktiengesellschaft,
Mainzer Landstrasse 217, D-6000 Frankfurt
a.Main 1 (DE)**

(72) Erfinder: **Moraw, Klaus, Dr., Im Ährenfeld 24,
D-4100 Duisburg (DE)**
Erfinder: **Paul, Hans-Günther, Dr., Dellstrasse 3,
D-4100 Duisburg (DE)**

## Beschreibung

Die Erfindung betrifft ein asbestfreies Reibmaterial für Bremsen und Kupplungen, das im wesentlichen aus einem Bindemittel oder Bindemittelgemisch und verstärkendem Material besteht, wobei als verstärkendes Material ein Gemisch aus Aramidfasern, Mineralfasern und Stahlfasern verwendet wird.

Die heutigen Reibmaterialien für Bremsen und Kupplungen werden bevorzugt unter Verwendung von Asbestfasern als Verstärkungskomponente hergestellt.

Aufgrund der toxischen, wahrscheinlich sogar cancerogenen Eigenschaften von Asbestfasern und der vorhersehbaren Verknappung des Rohstoffes Asbest besteht eine Notwendigkeit, diese Fasern gegen andere Stoffe auszutauschen.

Durch Einsatz anderer verstärkender Materialien wie Mineral-, Keramik-, Glas- oder organischer Fasern gelang es zwar, Asbest in Reibbelägen zu ersetzen, jedoch wurden die physikalischen Eigenschaften der »Asbestbeläge« meist nicht erreicht.

Andererseits aber wurden die Anforderungen der Industrie an die Reibbeläge in bezug auf thermische und mechanische Festigkeit, Verschleißfestigkeit, Bremsverzögerung und Stabilität der Verzögerung bei steigender Temperatur der Trommel und bei steigender Geschwindigkeit immer höher, d. h., man sucht nach Reibbelägen, die den »Asbestbelägen« qualitativ wesentlich überlegen sind.

Durch Auswahl bestimmter Fasern gelang es, Reibbeläge zu entwickeln, die in einzelnen Eigenschaften starke Verbesserungen zeigen. So erzielt man z. B. durch den Einsatz von Fasern auf Basis Diabas als Verstärkungsmaterial (DE-A-3 038 129) wesentlich günstigere Werte beim Verschleiß des Belages und der Trommel.

Aus US-A-4 119 591 ist ein Reibmaterial gemäß dem Oberbegriff des Anspruchs 1 bekannt, das 8—50 Vol.-% Fasern enthält, darunter Mineral- und Glasfasern sowie mindestens 3 Vol.-% Stahlfasern und mindestens 5 Vol.-% Cellulosefasern. Die Reibwerte bei Betriebstemperatur entsprechender Mischungen liegen aber meist unter denen asbesthaltiger Beläge.

Gemäß DE-A-2 727 541 werden in Reibmaterialien als verstärkendes Material Aramidfasern eingesetzt. Man erzielt den »Asbestbelägen« gleichwertige Reibbeläge, die aber einen geringeren Abrieb des Belages und auch der Trommel zeigen. Jedoch sind für erhöhte Ansprüche die Verzögerungswerte besonders bei steigender Geschwindigkeit und steigender Trommeltemperatur nicht ausreichend. Bessere Verzögerungswerte erhält man mit Reibbelägen gemäß US-A-4 130 537, in denen als verstärkendes Material Aramidfasern kombiniert mit Glasfasern eingesetzt werden. Allerdings zeigt sich auch mit diesen Belägen ein Verzögerungsabfall bei hohen Temperaturen. Außerdem sind sowohl Belagals auch Trommelverschleiß recht hoch.

Auch aus FR-A-2 379 563 ist der Einsatz von Aramidfasern, in Kombination mit Glasfasern, in Reibmaterialien bekannt. Diese Aramidfasern, die als gleichwertig zu anderen unschmelzbaren, organischen Fasern, wie z. B. Baumwolle, angesehen werden, sollen einen Zersetzungspunkt unterhalb von 430° C haben. Ebenso wie bei den anderen Patenten, gemäß denen Aramidfasern zur Herstellung von Reibbelägen verwendet werden, wählt man bewußt solche Aramidfasern, die sich unter Bildung von Kohlenstoffasern zersetzen. Das bedeutet aber im praktischen Gebrauch vor allem bei hoher Beanspruchung, daß sich die Zusammensetzung und damit das Eigenschaftsprofil entsprechender Bremsbeläge verändern.

Es bestand demnach die Aufgabe der Erfindung, ein asbestfreies Reibmaterial bereitzustellen, aus dem sich Reibbeläge herstellen lassen, die bei geringem Trommel- und Belagverschleiß hohe Verzögerungswerte zeigen, wobei diese Verzögerungswerte sowohl bei verschiedenen Geschwindigkeiten als auch bei unterschiedlichen Trommeltemperaturen oder bei mehreren aufeinanderfolgenden Bremsungen möglichst konstant bleiben.

Diese Aufgabe wird durch die Merkmale des Anspruchs gelöst.

Ein aus diesem Reibmaterial hergestellter Reibbelag zeigt die gewünschten Vorteile gegenüber den herkömmlichen Asbestbelägen. Die Verzögerungswerte lassen sich aber noch gleichmäßiger einstellen, wenn man im Reibmaterial als verstärkendes Material zusätzlich zur Faserkombination noch 5—20 Gew.-% Glimmermehl, Kaolin oder Wollastonit verwendet.

Die aus dem erfindungsgemäßen Reibmaterial hergestellten Reibbeläge eignen sich aufgrund der hohen Verschleißfestigkeit und der hohen und gleichmäßigen Verzögerungswerte im gesamten Belastungsbereich besonders gut zur Herstellung von Kupplungs- und Bremsbelägen für den Pkw-, Lkw- und den Eisenbahnsektor. Ihr Einsatz ist aber auch in jedem technischen Bereich möglich, in dem elastische oder starre Reibbeläge benötigt werden. Die Elastizität läßt sich je nach Anforderung durch Variation der verwendeten Bindemittel einstellen. So können als Bindemittel allein oder in Kombination miteinander die üblicherweise verwendeten härtbaren Polymere eingesetzt werden, wie etwa Phenol-, Epoxid- oder Furanharze und hitze- und chemikalienbeständige Natur- und Synthesekautschuke wie etwa Nitrilkautschuk. Durch verschiedene Kautschuk/Harz-Verhältnisse im Reibmaterial läßt sich die Flexibilität eines Reibbelages nahezu beliebig einstellen.

Als verstärkendes Material dienen verschiedene Fasern, von denen jede bestimmte Eigenschaften hat. Die Verwendung dieser Fasertypen in Reibbelägen ist bekannt, jedoch zeigten eigene Versuche, daß die Eigenschaften der jeweiligen einzelnen Fasertype nicht ausreichen, um gesteigerte Qualitätsansprüche an Reibbeläge befriedigen zu können. Lediglich bei der erfindungsgemäßen Kombination und bei den erfindungsgemäßen Verhältnissen der 3 verschiedenen Faserarten, gegebenenfalls noch zusammen mit der erfindungsgemäßen Menge an Glimmermehl, Kaolin oder Wollastonit ergeben sich die gewünschten Eigenschaften der Reibbeläge.

Die aus aromatischen Polyamiden bestehenden Aramidfasern sind thermisch hochstabil. Es werden in den erfindungsgemäßen Materialien Fasern mit einem Zersetzungspunkt von >470°C eingesetzt. Derartige Fasern sind z. B. unter der Bezeichnung Arenka® im Handel. Sie können in Form von Fasermüll vorliegen und werden in einer Menge von 2—12 Gew.-% der Gesamtmischung eingesetzt. Die einzelnen Fasern haben eine Faserlänge von 1—60 mm, bevorzugt von 1—30 mm.

Durch Zumischung von 6—25 Gew.-% (bezogen auf die Gesamtmischung) Mineralfasern zu Aramidfasern lassen sich Reibbeläge mit höheren Verzögerungswerten herstellen. Allerdings ist auch hier ein deutlicher Verzögerungsabfall bei steigender Belastung des Reibbelages zu beobachten. Als Mineralfaser lassen sich sowohl Steinwolle oder Schlackenwolle als auch Glasfasern, Keramikfasern oder Fasern auf Basis Diabas in die Reibmaterialien einsetzen.

Diabas ist ein vulkanisches Gestein, das sich durch besonders hohe Zähigkeit und Festigkeit auszeichnet. Dieses Gestein läßt sich aufschmelzen und aus der Schmelze zu Fasern verspinnen, wobei sich die Länge der Fasern variieren läßt. Zu den erfindungsgemäßen Reibmaterialien lassen sich Fasern mit Längen von 0,1—10 mm einsetzen. Vorzugsweise werden jedoch Fasern der Länge von 0,1—1 mm verwendet. Entsprechende Fasern sind unter der Bezeichnung Spinrock im Handel. Diese Fasern können ungeordnet, als sogenannter Fasermüll, vorliegen.

Als Metallkomponente in erfindungsgemäßen Reibbelägen eignet sich nur die Stahlfaser, die als Stahlwolle oder Fasermüll eingesetzt wird.

Durch die Zugabe von 16—36 Gew.-% (bezogen auf die Gesamtmischung) Stahlwolle zur Reibmaterialmischung werden der Belagverschleiß des entsprechenden Reibbelages und auch der Trommelverschleiß deutlich verringert. Außerdem wird die Belastbarkeit des Reibbelages wesentlich verbessert, d. h., der Reibbelag hat nahezu im gesamten Belastungsbereich gute und gleichmäßige Verzögerungseigenschaften. Lediglich bei extrem hohen Temperaturen zeigt sich ein Verzögerungsabfall. Dieser Verzögerungsabfall läßt sich durch weitere Zugabe von 5—20 Gew.-% (bezogen auf die Gesamtmischung) eines feinpulverisierten Verstärkerfüllstoffes wie Glimmermehl, Kaolin oder Wollastonit zur Reibmaterialmischung weitgehend beheben. Überraschenderweise werden dadurch auch die übrigen Eigenschaften des entsprechenden Reibbelags leicht verbessert.

Außer diesen Hauptkomponenten können wahlweise andere an sich bekannte Füll-, Gleit- und Reibstoffe sowie Härtungsmittel oder -beschleuniger für die Bindemittel mit in die Mischung eingearbeitet werden.

Zur Herstellung des erfindungsgemäßen Reibmaterials empfiehlt es sich, den gesamten Faserverband vor dem Vermischen mit dem Bindemittel in einem Mischer, Kneter oder Zerhacker zu öffnen.

Um die Benetzbarkeit der Fasern mit dem Bindemittel zu erhöhen und somit auch den Verbund zu verbessern, können die Fasern vor ihrer Verwendung mit einem Imprägniermittel getränkt werden. Als Imprägniermittel können Silane, Nitrilkautschuk, Phenolharze vom Novolak- oder Resol-Typ, Melaminharze oder Furanharze verwendet werden. Die Imprägnierung kann in der Weise erfolgen, daß die Fasern in einer Lösung des Imprägniermittels getränkt und anschließend getrocknet werden, oder daß man in einem Mischer oder Kneter aus Fasern und Imprägniermittel ein entsprechendes Masterbatch herstellt, wie dies in der Kautschukindustrie üblich ist.

Der Aufbau der Reibmaterialien sowie die Eigenschaften daraus hergestellter Reibbeläge werden in den folgenden Beispielen erläutert. In diesen Beispielen werden die Vorteile der erfindungsgemäßen Reibmaterialien anhand von vier Rezepturen aufgezeigt, wobei die Rezepturen 1 und 2 nur Aramidfasern bzw. eine Kombination Aramidfaser/Mineralfaser als verstärkendes Material enthalten. Sie dienen gewissermaßen als Vergleichsrezepturen. Die Mischungen 3 und 4 enthalten die erfindungsgemäßen Kombinationen Aramid-/Mineral-/Stahlfaser ohne und mit Zusatz von Glimmermehl.

Beispiele

A. Rezepturen

| Bestandteile | Gew.-% | | | |
|---|---|---|---|---|
| | 1 | 2 | 3 | 4 |
| Aramidfaser*) | 10,00 | 3,50 | 3,50 | 3,50 |
| Mineralfaser | — | 6,50 | 6,50 | 6,50 |
| Stahlwolle | — | — | 28,00 | 24,00 |
| Glimmermehl | — | — | — | 13,00 |
| Eisen(III)-oxid | 13,50 | 13,50 | 5,00 | 4,00 |
| Magnesiumoxid | 13,00 | 13,50 | 7,00 | 7,00 |
| Talkum | 9,00 | 9,00 | 8,00 | 2,00 |
| Calciumhydroxid | 10,00 | 10,00 | 6,00 | 6,00 |
| Thomasphosphat | 14,00 | 14,00 | 7,00 | 5,00 |
| Cashewnußölstaub | 5,00 | 5,00 | 5,00 | 5,00 |
| Weichmacher (Kohlenwasserst.) | 1,00 | 1,00 | 1,00 | 1,00 |
| Nitrilkautschuk | 13,00 | 13,00 | 13,00 | 13,00 |
| Schwefel | 0,90 | 0,90 | 0,90 | 0,90 |
| Zinkoxid | 0,70 | 0,70 | 0,70 | 0,70 |
| Vulkanisationsbeschleuniger | 0,40 | 0,40 | 0,40 | 0,40 |
| Graphit | 3,00 | 3,00 | 1,50 | 1,50 |
| Flammruß | 1,00 | 1,00 | 1,00 | 1,00 |
| Phenolharz | 5,50 | 5,50 | 5,50 | 5,50 |

*) Aramidfaser mit einem Zersetzungspunkt >470°C

B. Herstellung der Reibbeläge

Die Bestandteile werden in einem Kneter innig vermengt, die erhaltene Mischung granuliert, in eine Preßform gefüllt und bei 180° C und einem Druck von ca. 25 N/mm² je nach Stärke des herzustellenden Reibbelages mit unterschiedlichen Zeiten gepreßt. Dabei beträgt die Verweilzeit der Mischung in der Form ca. 0,5 min pro Millimeter Belagstärke. Die so erhaltenen Reibbelagrohlinge werden durch Schleifen oder Fräsen auf die gewünschten Maße gebracht und danach für 3 bis 12 Stunden je nach Reibbelagstärke in einem Umluftofen bei 150° C bis 200° C nachgehärtet.

C. Eigenschaften der Reibbeläge 1 bis 4

Die Reibbeläge werden als Scheiben- oder Trommelbremsbeläge auf einem Schwungmassenprüfstand auf ihr Reibverhalten und auf ihren Verschleiß hin untersucht.

Gemeinsam ist den Reibbelägen 1 bis 4, daß sie z. B. für Trommelbremsbeläge vor der Ausprüfung einem Prüfstandseinlauf bei max. 100° C Trommeltemperatur so lange unterzogen werden, bis die Beläge mindestens ein Tragbild von 80% der Belagoberfläche erreicht haben.

Nach diesem Einlauf werden die Beläge und die Trommel bzw. die Scheibe gemessen und gewogen.

Das Prüfprogramm für die Beläge 1 bis 4 läuft z. B. für den Anwendungsfall Trommelbremsbeläge folgendermaßen ab:

1) Verzögerung $[m/sec^2]$ als Funktion des hydraulischen Drucks p (Ausgangsgeschwindigkeit 80 km/h; Trommeltemperatur zu Beginn jeder Bremsung 60° C)

| p [bar] | Rezeptur | | | |
|---|---|---|---|---|
| | 1 | 2 | 3 | 4 |
| 20 | 1,4 | 1,5 | 1,7 | 1,8 |
| 40 | 2,6 | 2,9 | 3,2 | 3,3 |
| 60 | 3,8 | 4,2 | 4,5 | 4,7 |
| 80 | 5,1 | 5,5 | 5,9 | 6,1 |

2) Verzögerung $[m/sec^2]$ (wie unter 1) als Funktion des hydraulischen Drucks (Trommeltemperatur zu Beginn jeder Bremsung 240° C)

| p [bar] | Rezeptur | | | |
|---|---|---|---|---|
| | 1 | 2 | 3 | 4 |
| 20 | 1,2 | 1,3 | 1,4 | 1,7 |
| 40 | 2,2 | 2,4 | 2,7 | 3,2 |
| 60 | 3,3 | 3,6 | 3,6 | 4,5 |
| 80 | 4,6 | 4,8 | 5,1 | 6,0 |

3) Verzögerung $[m/sec^2]$ als Funktion der Geschwindigkeit V (bei einem konstanten hydraulischen Druck von 60 bar; Trommeltemperatur zu Beginn jeder Bremsung 60° C)

| V [km/h] | Rezeptur | | | |
|---|---|---|---|---|
| | 1 | 2 | 3 | 4 |
| 40 | 4,1 | 4,6 | 5,0 | 5,2 |
| 60 | 3,9 | 4,4 | 4,8 | 5,0 |
| 80 | 3,8 | 4,2 | 4,8 | 5,1 |
| 100 | 3,8 | 4,0 | 4,7 | 4,9 |
| 120 | 3,6 | 3,8 | 4,6 | 4,9 |
| 140 | 3,4 | 3,7 | 4,4 | 4,7 |

4) Verzögerung [m/sec$^2$] bei 12 aufeinanderfolgenden Stops (die Stops erfolgen jeweils aus 80 km/h mit 40 bar hydraulischem Druck im Abstand von jeweils 25 sec)

| Anzahl der Stops | Rezeptur 1 | 2 | 3 | 4 |
|---|---|---|---|---|
| 1 | 2,6 | 2,8 | 3,1 | 3,0 |
| 2 | 2,7 | 2,9 | 3,0 | 3,2 |
| 3 | 2,8 | 3,0 | 3,2 | 3,3 |
| 4 | 2,8 | 3,0 | 3,2 | 3,4 |
| 5 | 2,8 | 2,9 | 3,2 | 3,4 |
| 6 | 2,7 | 2,9 | 3,2 | 3,4 |
| 7 | 2,7 | 2,8 | 3,0 | 3,3 |
| 8 | 2,6 | 2,7 | 3,1 | 3,3 |
| 9 | 2,5 | 2,7 | 2,9 | 3,1 |
| 10 | 2,4 | 2,5 | 2,8 | 3,0 |
| 11 | 2,3 | 2,4 | 2,7 | 3,0 |
| 12 | 2,3 | 2,4 | 2,7 | 2,9 |

5) Verzögerung [m/sec$^2$] (wie unter 1) als Funktion des hydraulischen Druckes im Anschluß an 4)

| p [bar] | Rezeptur 1 | 2 | 3 | 4 |
|---|---|---|---|---|
| 20 | 1,4 | 1,5 | 1,7 | 1,7 |
| 40 | 2,5 | 2,8 | 3,1 | 2,4 |
| 60 | 3,6 | 4,0 | 4,4 | 4,9 |
| 80 | 4,9 | 5,2 | 5,9 | 6,3 |

6

6) Verzögerung [m/sec²] als Funktion der Temperatur (Ausgangsgeschwindigkeit jeweils 30 km/h; Druck 20 bar)

| T [°C] | Rezeptur 1 | 2 | 3 | 4 |
|--------|------------|-----|-----|-----|
| 20  | 1,4 | 1,5 | 1,7 | 1,8 |
| 40  | 1,4 | 1,6 | 1,8 | 2,0 |
| 60  | 1,4 | 1,7 | 1,9 | 2,2 |
| 80  | 1,6 | 1,8 | 2,1 | 2,2 |
| 100 | 1,6 | 1,8 | 2,1 | 2,3 |
| 140 | 1,5 | 1,8 | 2,1 | 2,2 |
| 180 | 1,5 | 1,7 | 2,0 | 2,2 |
| 220 | 1,3 | 1,6 | 1,9 | 2,2 |
| 260 | 1,2 | 1,5 | 1,8 | 2,1 |
| 300 | 1,0 | 1,3 | 1,7 | 2,0 |

Nach Ablauf dieses Programms werden die Bremsbeläge und die Bremstrommel gemessen und gewogen.

Danach wird das gleiche Programm noch einmal wiederholt und der Verschleiß als arithmetisches Mittel aus beiden Programmen bestimmt.

| | Rezeptur 1 | 2 | 3 | 4 |
|--------|------------|------|------|------|
| Belagverschleiß [g]    | 0,97 | 1,13 | 0,43 | 0,39 |
| Trommelverschleiß [g]  | 0,1  | 1,4  | 0,2  | 0,2  |

**Patentansprüche**

1. Asbestfreies Reibmaterial für Bremsen und Kupplungen, bestehend aus 5—25 Gew.-% aushärtbarem Bindemittel oder Bindemittelgemisch, 24,5—70 Gew.-% verstärkendem Material, davon 6—25 Gew.-% Mineralfasern und 16—36 Gew.-% Stahlfasern, sowie anderen Zusatzstoffen, dadurch gekennzeichnet, daß es 2,5—12 Gew.-% Aramidfasern mit einem Zersetzungspunkt oberhalb von 470° C enthält.

2. Reibmaterial nach Anspruch 1, dadurch gekennzeichnet, daß es als verstärkendes Material zusätzlich 5—20 Gew.-% Glimmermehl, Kaolin oder Wollastonit enthält.

3. Reibmaterial nach Anspruch 1 oder 2, dadurch gekennzeichnet, daß als Mineralfasern Steinwolle, Schlackenwolle, Diabasfasern, Keramikfasern und Glasfasern oder Kombinationen aus diesen eingesetzt werden.

4. Reibmaterial nach Anspruch 1 oder 3, dadurch gekennzeichnet, daß die Faserlänge der Mineralfasern 0,1 mm bis 10 mm, bevorzugt 0,1 mm bis 1 mm beträgt.

5. Reibmaterial nach einem der Ansprüche 1 bis 4, dadurch gekennzeichnet, daß der Faserverbund in Form von Fasermüll gebettet ist.

6. Reibmaterial nach einem der Ansprüche 1 bis 5, dadurch gekennzeichnet, daß sowohl der Aramidfaser- als auch der Mineralfaser- und der Stahlfaserverbund vor dem eigentlichen Einmischen in das Reibmaterial in einem Mischer oder dergleichen geöffnet werden.

7. Reibmaterial nach einem der Ansprüche 1 bis 6, dadurch gekennzeichnet, daß die Fasern mit einem Imprägniermittel behandelt werden.

8. Reibmaterial nach einem der Ansprüche 1 bis 7, dadurch gekennzeichnet, daß als Imprägniermit-

7

tel Silane, Epoxide, Nitril und Styrol-Butadien-Kautschuk, Phenolharze oder Furanharze verwendet werden.

## Claims

1. An asbestos-free friction material for brakes and couplings comprising 5 to 25% by weight of a hardenable binder or binder mixture, 24,5 to 70% by weight of a reinforcing material, 6 to 25% by weight of it mineral fibers and 16 to 36% by weight of it steel fibers and other conventional additives containing 2,5 to 12% by weight of aramide fibers having a decomposition point greater than 470° C.

2. The friction material of claim 1 containing as reinforcing material additional 5 to 20% by weight of powdered mica, kaolin or wollastonite.

3. The friction material of claim 1 or 2 wherein the mineral fibers are selected from the group consisting of rock wool, slag wool, diabase fibers, ceramic fibers, glass fibers and mixtures thereof.

4. The friction material of claim 1 or 3 wherein the length of the mineral fibers is 0,1 mm to 10 mm, preferably 0,1 to 1 mm.

5. The friction material of one of the claims 1 to 4 wherein the fibers are in the form of fiber refuse.

6. The friction material of one of the claims 1 to 5 wherein the aramide — as well as the mineral — or the steel-fiber composite is opened in a mixing equipment before it is mixed into the friction material compound.

7. The friction material of one of the claims 1 to 6 wherein the fibers are treated with an impregnating agent.

8. The friction material of one of the claims 1 to 7 wherein the impregnating agent is selected from the group consisting of silanes, epoxides, nitrile rubbers, SBR rubber, phenolic resins or furan resins.

## Revendications

1. Matière de friction pour freins et embrayages, constituée de 5 à 25% en poids d'un liant ou mélange liant durcissable, de 24,5 à 70% en poids d'une matière de renforcement, dont de 6 à 25% en poids de fibres minérales et de 16 à 36% en poids de fibres d'acier, ainsi que d'autres additifs, matière de friction caractérisée en ce qu'elle contient de 2,5 à 12% en poids de fibres d'aramide ayant un point de décomposition supérieur à 470° C.

2. Matière de friction selon la revendications 1, caractérisée en ce qu'elle contient en outre, comme matière de renforcement, de 5 à 20% en poids de mica en poudre, de kaolin ou de wollastonite.

3. Matière de friction selon l'une des revendications 1 et 2, caractérisée en ce qu'elle contient, comme fibres minérales, de la laine minérale, de la laine de laitier, des fibres de diabase, des fibres de céramique et des fibres de verre ou des associations de ces fibres.

4. Matière de friction selon l'une des revendications 1 et 3, caractérisée en ce que la longueur des fibres minérales est comprise entre 0,1 et 10 mm, de préférence entre 0,1 et 1 mm.

5. Matière de friction selon l'une quelconque des revendications 1 à 4, caractérisée en ce que l'assemblage de fibres est déposé en couches sous la forme de poussière de fibres.

6. Matière de friction selon l'une quelconque des revendications 1 à 5, caractérisée en ce que l'assemblage des fibres d'aramide ainsi que l'assemblage des fibres minérales et celui des fibres d'acier sont ouverts dans un mélangeur ou un appareil du même genre, avant l'incorporation proprement dite dans la matière de friction.

7. Matière de friction selon l'une quelconque des revendications 1 à 6, caractérisée en ce que les fibres sont traitées par un agent d'imprégnation.

8. Matière de friction selon l'une quelconque des revendications 1 à 7, caractérisée en ce qu'on utilise, comme agents d'imprégnation, des silanes, des époxydes, du caoutchouc nitrile, du caoutchouc styrène-butadiène, des résines phénoliques ou résines de furanne.